# EUROPEAN PATENT APPLICATION

(11) **EP 4 620 861 A2**
(43) Date of publication of application: **24.09.2025**
(21) Application number: 25188238.7
(22) Date of filing: 10.10.2022
(51) Int. Cl.: B65D 85/804

(54) **A BEVERAGE CAPSULE COMPRISING A BARRIER LINER ATTACHED TO A PULP BODY**

(30) Priority: 15.10.2021 EP 21202831
(62) Divisional of application: 22802050.9
(71) Applicant: Société des Produits Nestlé S.A., 1800 Vevey (CH)
(72) Inventor: HAUSMANN, Michael, Karlheinz, 2012 Auvernier (CH); BOURG, Violette, Catherine, Marguerite, 01220 Divonne Les Bains (FR); ZIMMER, Johannes, 1012 Lausanne (CH); DANNENBERG, Christina Friederike, 1004 Lausanne (CH)
(74) Representative: Rosolen-Delarue, Katell

(57) **Abstract**

The present invention is directed to a capsule (1) for beverage preparation, comprising a cup-shaped body (2) of moulded cellulose pulp and a closing membrane (5) attached to a peripheral rim (4) of said body (2). The capsule further comprises a multilayer polymeric liner (3) attached to the inner surface of the cellulose pulp body (2), said liner comprising:
(i) an outermost polymeric layer (7),
(ii) a first tie layer (8),
(iii) a barrier layer (9),
(iv) a second tie layer (10),
(v) an innermost polymeric layer (11),
In which liner,
- the thickness of the outermost layer (7) and the thickness of the innermost layer (11) are comprised between 10 and 100 pm and are preferably identical;
- the elongation at break of the outermost layer (7) is higher than the elongation at break of the innermost layer (11);
- The melt flow rate (MFR) of the outermost layer (7) measured at 150°C during 10 minutes with a pressure of 2.16 kg, is lower than the melt flow rate (MFR) of the innermost layer (11), measured at 190°C during 10 minutes with a pressure of 2.16 kg;
- The melting point temperature of the outermost layer (7) is lower than the melting point temperature of the innermost layer (11),
and in which, the outermost layer serves as an adhesive to the cellulose pulp of the capsule body.

## Description

### Field of the invention

The present invention concerns a capsule for beverage preparation that is recyclable in the paper recycling stream and comprises an outer body made of compressed cellulosic pulp, which is doubled with gas and moisture barrier liner tightly adhered to said pulp body.

### Background of the invention

Capsules and pods for beverage preparation in a beverage preparation machine are well known. They are a convenient and clean approach to beverage consumption. In the following description, the generic term "capsule" will be used and encompasses single use packages for preparing beverages for human consumption by insertion in a beverage preparation machine that is adapted to inject a fluid - in principle hot water - into the package for mixing with an ingredient contained therein. Examples of such beverage packages are not limited to rigid capsules, but also comprise rigid, semi-rigid, or flexible pods, pads, cartridges of various types, and even sachet-type containers.

Typically, such capsules are manufactured from plastics such as polyolefins or biodegradable plastics, that are generally injected or thermoformed to obtain a cup that is filled with an ingredient and then closed with a membrane to close the capsule in a gas and moisture tight manner.

In the recent period, awareness about the environment impact of packaging plastics on the increased, and there is a need for new packaging solutions that are either biodegradable after use, or recyclable, and in particular such that a used package can be either composted or recycled in a recycling stream that is adapted for paper or carton ("paper recycling stream").

Recently, beverage preparation capsules have been developed which are made of cellulosic fiber pulp (or "cellulose pulp" or "paper pulp") which is moulded to form a rigid or semi-rigid capsule cup-shaped body defining a compartment for containing a beverage precursor ingredient such as roast and ground coffee. The cup-shaped body is closed by attaching (e.g. by sealing) a wall, for instance a membrane or a film to it.

In order to guarantee freshness of the beverage precursor ingredient over the lifetime of the capsule, and especially during storage until use, it is necessary to incorporate an oxygen and moisture barrier material to the cellulosic pulp (as well as to the closing membrane). The barrier material generally takes the form of a so-called "barrier liner" which is a mono- or multilayer film that is adhered to the internal surface of the pulp body (i.e. the surface turned towards the ingredient). Adhering the liner onto the pulp is done by thermoforming the two in a mould.

During beverage preparation, the capsule is inserted into a brewing chamber of a beverage preparation machine. The machine comprises water injection means, such as a set of blades designed to pierce through the thickness of the capsule body and inject water therein under pressure. Water mixes with the ingredient which produces a beverage. When water pressure increases and reaches a certain level, the closing membrane deflects outwardly and pierces onto piercing means of the beverage machine. When the membrane is pierced, the beverage can flow outside the capsule, towards a cup.

Beverage preparation with pulp-based capsules as described above is a very promising way to reduce the environmental footprint of packages. However, a technical drawback appeared during piercing of the capsule body by the water injection blades of the machine. At the time the water injection blades pierce through the capsule pulp body, these blades catch pulp material and as they move towards the interior of the capsule, the mass of pulp attached to the blades delaminates the liner from the pulp and pushes the liner without piercing it. This delamination effect is reinforced by the elasticity of the liner which is higher than that of the pulp. As a result, the liner is dragged towards the interior of the capsule without being pierced, and when water injection starts, no water enters into the capsule compartment: the capsule is blocked and no beverage comes out.

It is an object of the present invention to provide a technical solution to the delamination challenge mentioned above in beverage capsules made of moulded pulp and having a barrier liner.

### Summary of the invention

The object of the invention is achieved with a capsule for beverage preparation, according to claim 1.

In more details, the capsules comprises a cup-shaped body and a closing membrane attached to a peripheral rim of said body, said body and membrane defining a closed ingredient compartment, said capsule walls being adapted to be pierced by water injection means of a beverage preparation machine for injecting water under pressure in the compartment, and said closing membrane being adapted to pierce onto opening means of said machine for dispensing a beverage prepared within said compartment when water pressure inside the compartment reaches a predetermined value, at least said capsule body being made of rigid or semi-rigid moulded cellulose pulp, characterized in that it further comprises a multilayer polymeric liner attached to the inner surface of the cellulose pulp.

The liner comprises the following structure:
(i) an outermost polymeric layer comprising a biodegradable polymer selected within the list of: polybutylene succinate (PBSA / bioPBS), polybutylene adipate terephthalate (PBAT), starch, cellulose derivates, polylactic acid (PLA), polyhydroxyalcanoates (PHA), or a combination thereof,
(ii) a first tie layer comprising a biodegradable modified or functionalized polyolefin, having a melting point temperature comprised between 180°C and 230°C and a thickness comprised between 1 and 12 pm,
(iii) a barrier layer comprising a polymer selected within the list of: butenediol vinyl alcohol copolymer (BVOH), polyvinyl alcohol (PVOH) or a combination thereof, and having a melting point temperature comprised between 180°C and 230°C and a thickness comprised between 1 and 15 pm,
(iv) a second tie layer comprising a biodegradable modified or functionalized polyolefin, having a melting point temperature comprised between 180°C and 230°C and a thickness comprised between 1 and 10 pm,
(v) an innermost polymeric layer comprising a biodegradable polymer selected within the list of: polybutylene succinate (PBSA), polybutylene adipate terephthalate (PBAT), starch, cellulose derivates, polylactic acid (PLA), polyhydroxyalcanoates (PHA) or a combination thereof.

According to claim 1,
- the thickness of the outermost layer and the thickness of the innermost layer are comprised between 10 and 100 pm and are preferably identical;
- the elongation at break of the outermost layer is higher than the elongation at break of the innermost layer;
- The melt flow rate (MFR) of the outermost layer measured at 150°C during 10 minutes with a pressure of 2.16 kg, is lower than the melt flow rate (MFR) of the innermost layer, measured at 190°C during 10 minutes with a pressure of 2.16 kg;
- The melting point temperature of the outermost layer is lower than the melting point temperature of the innermost layer
and, the outermost layer serves as an adhesive to the cellulose pulp of the capsule body.

Interestingly, the polymers that are suitable for the invention are biodegradable polymers, preferably home compostable polymers. Home compostability is now well defined on a national level and mainly based on international standard EN 13432; therefore, they do not require to be further defined in-depth in the present specification. Materials or products compliant with these standards can be recognized by a conformity mark stating their home compostability. Some examples of home compostability certifications at a national level include, but are not limited to, the following. The certifier TUV AUSTRIA BELGIUM offers such a home compostability certification scheme, and DIN CERTCO offers a certification for home compostability according to the Australian standard AS 5810. Italy has a national standard for composting at ambient temperature, UNI 11183:2006. In November 2015, the French Standard "NF T 51-800 Plastics - Specifications for plastics suitable for home composting" was introduced. This standard is covered in the DIN CERTCO scheme.

More specifically, the outermost layer and the innermost layer are both made of a polybutylene adipate terephthalate (PBAT) based formulation but have different melt flow rates (MFR) and different melting point temperatures.

In particular, the outermost layer has a melting point temperature comprised below 80°C, and the innermost layer has a melting point temperature comprised between 110°C and 180°C.

Furthermore, the outermost layer has an elongation at break comprised between 10% and 800%, and the innermost layer has an elongation at break comprised between 10% and 1000%.

In addition, the outermost layer has a melt flow rate (MFR) comprised between 2 and 4 and the innermost layer has a melt flow rate (MFR) comprised between 4 and 10.

Preferably, the polymer of the innermost layer is an annealed polymer.

In relation to the first tie layer, the first tie layer comprises a biodegradable modified or functionalized biopolyester obtained from a base biopolyester molecule to which a functional group is grafted to provide an adhesive function and is compatible with the two adjacent layers.

According to the principle of the invention, a multilayer liner is provided with a barrier (to oxygen and/or moisture) as a middle layer. The physical characteristics of the innermost and outermost layers are carefully selected:
- the outermost layer in contact with the pulp has a low melting point temperature (below 80°C) which brings high cohesion to the pulp; this is due to the fact that during thermoforming process of the liner to the pulp body, when temperature increases, the polymer constitutive of the outermost layer flows rapidly and with a low viscosity between the pulp fibers of the body, and impregnates the pulp; then, when temperature decreases after the thermoforming step, the polymer layer of the liner hardens and polymer is completely intricated between the pulp fibers, such that it is impossible to delaminate the liner from the pulp body, and in addition
- the innermost layer in contact with the beverage ingredient has a high melting point (above 110°C). A higher melting point than the outermost layer guarantees that during thermo-forming of the liner with the pulp, said outermost layer melts very fast and in a perfectly liquid state due its melting point which is well below the usual thermo-forming temperature, such that it flows in between the cellulosic fibers of the pulp, and such that when it cools down after thermoforming, the material constitutive of said outermost layer is intricated with the pulp cellulosic fibers and adheres to them. At the same time, the innermost layer does not melt during the thermo-forming process step, due to its higher melting point (which is above the usual thermo-forming temperature), such that it separates easily from the thermo-form plug when the thermoforming of the liner to the pulp is completed and the thermo-forming mould is open.

In one advantageous embodiment of the invention, the innermost layer is annealed to lower its elongation at break characteristics, thus making it less elastic and even easier to pierce by the blades.

By "liner" it is meant a monolayer or multilayer film that is obtained by extrusion-blowing, or extrusion-lamination, or cast-extrusion.

A monolayer or multilayer liner applied to the pulp substrate is different from a monolayer or multilayer obtained by coating the pulp substrate. Coating a barrier layer onto a moulded pulp substrate is challenging because the surface of the moulded pulp is rough and uneven. As a result, it is necessary to coat a high thickness of a preparation surface coating in order to smoothen the pulp surface before a barrier layer can be coated. If the surface is not smoothened, there is a risk that the barrier layer may be applied in an uneven manner and such that some zones are not sufficiently coated, hence impairing the barrier properties of the whole item. The application of a liner does not pose such a problem because all layers are preformed in an even manner, and such that the barrier layer is homogeneous across the entire surface of said liner before the latter is applied to the moulded pulp substrate. The barrier quality is therefore guaranteed across the entire surface of the resulting item and requires less polymeric material than a coating.

Furthermore, a coating is normally applied on a flat sheet of substrate material. However, a capsule has a tridimensional geometry which makes it difficult, if not impossible to coat with a thin molten polymer layer.

In a preferred embodiment of the invention, the cup-shaped body comprises a peripheral rim onto which the closing membrane is attached.

Advantageously, at least the outermost, innermost, barrier and tie layers are co-extruded (extrusion-casted) layers.

In a preferred embodiment of the invention, the closing membrane is made of an extrusion coated paper, a fiber-spinning coated paper, or a polymer film comprising a compatible polymer material. This is to ensure optimal sealing adhesion between the liner and the closing membrane at the time the capsule is closed.

Preferably, the ingredient contained in the capsule according to the invention is roast and ground coffee.

### Brief description of the drawings

Additional features and advantages of the present invention are described in, and will be apparent from, the description of the presently preferred embodiments which are set out below with reference to the drawings in which:
**Figure 1** is a schematic cut view of a capsule according to the invention;
**Figure 2** is a schematic cut view of a multilayer liner according to the invention;
**Figures 3A****,** **3B, 4A to 4C** and **5** are schematic views of the different steps of attaching a barrier liner to a pulp cup-shaped body according to the invention.

### Detailed description of the invention

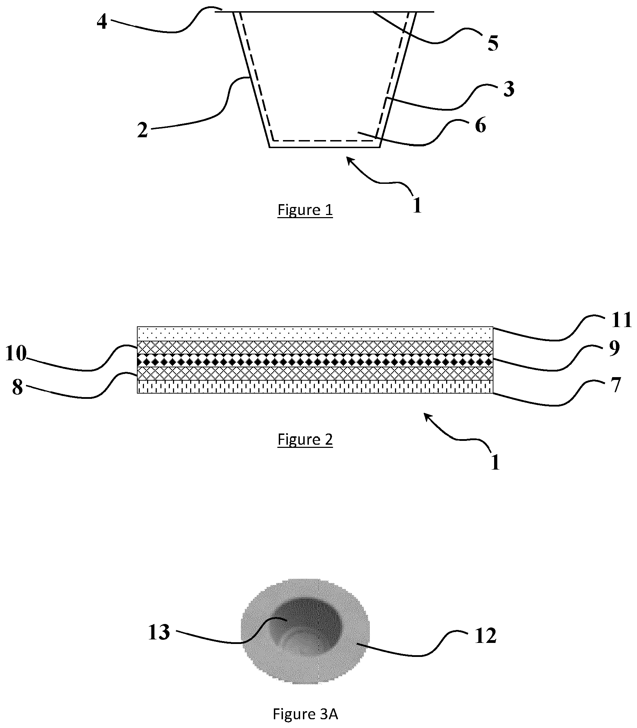

As illustrated in the embodiment of **figure 1****,** the invention concerns a beverage preparation capsule 1, comprising a cup-shaped capsule body 2 covered on its inner surface by an oxygen and barrier liner 3. The capsule body 2 further comprises a peripheral rim 4 that surrounds an opening, said opening being closed by a membrane 5 that is sealed onto the rim 4. The capsule body closed by the membrane 5 defines a compartment 6 for a roast and ground coffee ingredient contained therein.

The barrier liner 3 is a multi-layer film, an embodiment of which is illustrated in **figure 2**. In this embodiment, the liner comprises the following layers attached one to another.

First, it comprises an outermost polymeric layer 7, made of a polybutylene adipate terephthalate (PBAT) based formulation. This outermost layer has a thickness of 17 µm, and an elongation at break of 600% and serves as an adhesive to the pulp. It also features a melt flow rate (MFR) of 3 (measured at 150°C during 10 minutes with a pressure of 2.16 kg), and a melting point temperature of 75°C.

To the outermost layer 7 is attached a first tie layer 8 made of a biopolyester grafted with maleic anhydride, having a melting point temperature of 200°C and a thickness of 4 µm. The tie layer 8 is an adhesive layer that binds tightly the outermost layer 7 to the barrier layer 9 that will now be described.

As a core layer located in the middle of the multilayer liner structure is a barrier layer 9 made of butenediol vinyl alcohol copolymer (BVOH), having a melting point temperature comprised of 200°C and a thickness of 8 µm. This barrier layer provides barrier against oxygen and moisture transfer between the outside atmosphere and the capsule compartment.

To the barrier layer 9 is attached a second tie layer 10 made of a biopolyester grafted with maleic anhydride, having a melting point temperature of 200°C and a thickness of 4 µm.

Lastly, the liner in this embodiment depicted in **figure 2** comprises an innermost polymeric layer 11 made of polybutylene adipate terephthalate (PBAT) based formulation. This innermost layer has a thickness of 17 µm, and an elongation at break of 177%. It also features a melt flow rate (MFR) of 6 measured at 190°C during 10 minutes with a pressure of 2.16 kg. This layer has a melting point temperature of 115°C.

More precisely, the various layers of the liner according to the present invention can be chosen according to the following table, which provides various thicknesses that can be chosen for each of the different layers:

| **LAYER** | **Grade Name** | **Tm (°C)** | **MFR** | | **total thickness** | **50** | **60** | **80** | **100** | **50** | **Commercial name of polymer** | **Supplier** |
|---|---|---|---|---|---|---|---|---|---|---|---|---|
| Outermost layer (adhesive) | KFO1U | 75 | 3 | (150°C/10' - 2.16 kg) | | 17 | 22 | 32 | 42 | 15 | MaterBi | NOVAMONT |
| Tie layer | BTR800P | 200 | | | | 4 | 4 | 4 | 4 | 5 | | MCPP |
| Barrier | BVE8049P | 200 | | | | 8 | 8 | 8 | 8 | 10 | G-polymer | MCPP |
| Tie | BTR800P | 200 | | | | 4 | 4 | 4 | 4 | 5 | | MCPP |
| Innermost layer (functional) | ES03BO* | 115 | 6 | (190°C/10' - 2.16 kg) | | 17 | 22 | 32 | 42 | 15 | MaterBi | NOVAMONT |

The capsule according to the invention is manufactured with the following steps, in order.

As illustrated in **figure 3A**, a capsule cup 12 is first moulded from a dry or wet (preferably wet) pulp mixture. Moulding cellulose pulp is known in the art already and will not be described in more detail in the present description. The pulp cup 12 has an opening 13 into which a roast and ground coffee ingredient can be filled (not illustrated).

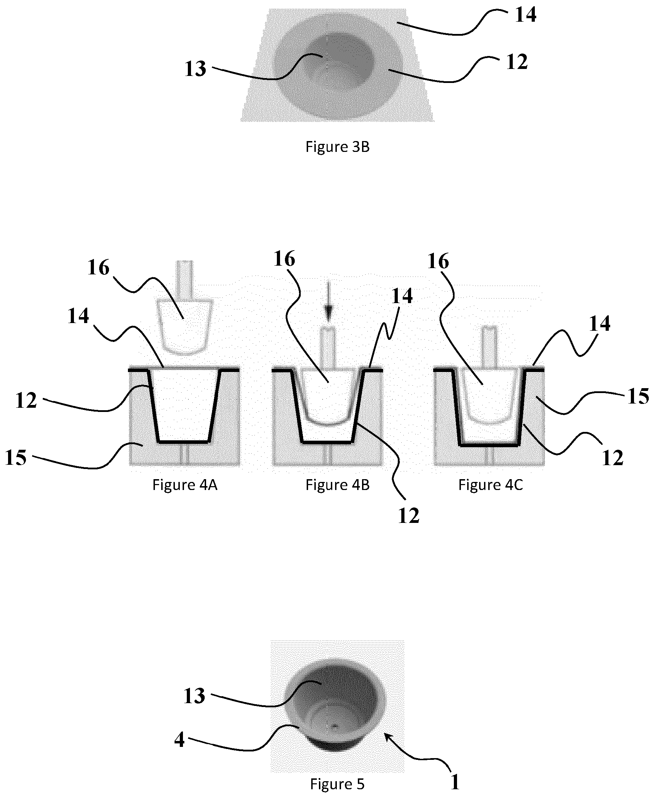

The barrier liner film 3 is then provided as a flat sheet 14 and placed over the opening 13 of the pulp cup 12, while said cup 12 is placed in a mould 15, as depicted in **figures 3B** and **4A****.**

Then, as shown in **figure 4B****,** a plunger 16 is applied onto the surface of the flat sheet 14, which is moved towards the interior of the cup 12, such that the barrier liner sheet is pushed into the vicinity of the cup's interior, until said liner is fully attached to the pulp cup surface as shown in **figure 4C****.** The technique of attaching the barrier liner sheet 14 to the surface of the pulp cup 12 is largely based on thermoforming techniques.

Once the attachment process of the barrier liner sheet 14 onto the inside surface of the pulp cup 12 is terminated, the peripheral rim 4 is trimmed (i.e. cut to the right diameter) so that an empty pulp capsule with barrier properties is obtained as illustrated in **figure 5****,** which comprises an opening through which a coffee powder is filled. Then, the filled capsule is closed by sealing a membrane 5 onto the rim 4 of said capsule.

It should be understood that various changes and modifications to the presently preferred embodiments described herein will be apparent to those skilled in the art. Such changes and modifications can be made without departing from the spirit and scope of the present invention and without diminishing its attendant advantages. It is therefore intended that such changes and modifications be covered by the appended claims.

## Claims

1. A capsule (1) for beverage preparation, comprising a cup-shaped body (2) and a closing membrane (5) attached to a peripheral rim (4) of said body (2), said body (2) and membrane (5) defining a closed ingredient compartment (6), said capsule being adapted to be pierced by water injection means of a beverage preparation machine for injecting water under pressure in the compartment, and said membrane (5) being adapted to pierce onto opening means of said machine for dispensing a beverage prepared within said compartment when water pressure inside the compartment reaches a predetermined value, at least said capsule body being made of rigid or semirigid molded cellulose pulp, said the capsule comprising a multilayer polymeric liner (3) attached to the inner surface of the cellulose pulp body (2), said liner comprising:
(i) an outermost polymeric layer (7) comprising a biodegradable polymer selected within the list of: polybutylene succinate (PBSA / bioPBS), polybutylene adipate terephthalate (PBAT), starch, cellulose derivates, polylactic acid (PLA), polyhydroxyalcanoates (PHA), or a combination thereof,
(ii) a first tie layer (8) comprising a biodegradable modified or functionalized polyolefin, having a melting point temperature comprised between 180°C and 230°C and a thickness comprised between 1 and 12 pm,
(iii) a barrier layer (9) comprising a polymer selected within the list of: butenediol vinyl alcohol copolymer (BVOH), polyvinyl alcohol (PVOH) or a combination thereof, and having a melting point temperature comprised between 180°C and 230°C and a thickness comprised between 1 and 15 pm,
(iv) a second tie layer (10) comprising a biodegradable modified or functionalized polyolefin, having a melting point temperature comprised between 180°C and 230°C and a thickness comprised between 1 and 10 pm,
(v) an innermost polymeric layer (11) comprising a biodegradable polymer selected within the list of: polybutylene succinate (PBSA), polybutylene adipate terephthalate (PBAT), starch, cellulose derivates, polylactic acid (PLA), polyhydroxyalcanoates (PHA) or a combination thereof,
**characterized in that**
- the thickness of the outermost layer and the thickness of the innermost layer are comprised between 10 and 100 pm and are preferably identical;
- the elongation at break of the outermost layer is higher than the elongation at break of the innermost layer;
- The melt flow rate (MFR) of the outermost layer measured at 150°C during 10 minutes with a pressure of 2.16 kg, is lower than the melt flow rate (MFR) of the innermost layer, measured at 190°C during 10 minutes with a pressure of 2.16 kg;
- The melting point temperature of the outermost layer is lower than the melting point temperature of the innermost layer
**and in that,** the outermost layer serves as an adhesive to the cellulose pulp of the capsule body.

2. A capsule (1) according to claim 1, the outermost layer (7) and the innermost layer (11) are both made of a polybutylene adipate terephthalate (PBAT) based formulation but have different melt flow rates (MFR) and different melting point temperatures.

3. A capsule (1) according to any one of the claims 1 or 2, wherein the outermost layer (7) has a melting point temperature comprised below 80°C, and the innermost layer (11) has a melting point temperature comprised between 110°C and 180°C.

4. A capsule (1) according to any one of the preceding claims, wherein the outermost layer (7) has an elongation at break comprised between 10% and 800%, and the innermost layer (11) has an elongation at break comprised between 10% and 1000%.

5. A capsule (1) according to any one of the preceding claims, wherein the outermost layer (7) has a melt flow rate (MFR) comprised between 2 and 4 and the innermost layer (11) has a melt flow rate (MFR) comprised between 4 and 10.

6. A capsule (1) according to any one of the preceding claims, wherein the polymer of the innermost layer (11) is an annealed polymer.

7. A capsule (1) according to any one of the preceding claims, wherein the first tie layer (8) comprises a biodegradable modified or functionalized biopolyester obtained from a base biopolyester molecule to which a functional group is grafted to provide an adhesive function and is compatible with the two adjacent layers.

8. A capsule (1) according to any one of the preceding claims, wherein at least the outermost (7), innermost (11), barrier (9) and tie layers (8, 10) are co-extruded layers.

9. A capsule (1) according to any one of the preceding claims, wherein the closing membrane (5) is made of an extrusion coated paper, a fiber spinning coated paper, or a polymer film comprising a compatible polymer material.

10. A capsule (1) according to any one of the preceding claims, wherein the outermost layer (7) and innermost layer (11) of the multilayer polymeric liner (3) have different thickness.

11. A capsule (1) according to any one of the preceding claims, wherein the biodegradable polymer of the outermost (7) and/or of the innermost (11) layers of the multilayer polymeric liner (3) is bio-based.

12. A capsule (1) according to any one of the preceding claims wherein said ingredient is roast and ground coffee.
